# EUROPEAN PATENT APPLICATION

(11) **EP 4 567 915 A1**
(43) Date of publication of application: **11.06.2025**
(21) Application number: 24767349.4
(22) Date of filing: 29.02.2024
(51) Int. Cl.: H01M 4/04, F26B 25/06, B05B 1/20, B05B 12/08, B05B 9/04, F26B 21/00, B05B 12/14

(54) **DRYING DEVICE AND DRYING METHOD FOR ELECTRODE SHEET**

(30) Priority: 09.03.2023 KR 20230031025
(71) Applicant: LG Energy Solution, Ltd., Seoul 07335 (KR)
(72) Inventor: PARK, Min Gu, Daejeon 34122 (KR); LEE, Taek Soo, Daejeon 34122 (KR); YOU, Seong Jae, Daejeon 34122 (KR)
(74) Representative: Plasseraud IP
(86) International application number: PCT/KR2024/002647
(87) International publication number: WO 2024/186060

(57) **Abstract**

Disclosed herein relates to a drying device according to one embodiment of the present invention comprising a solvent supply unit for spraying a solvent onto a non-coated portion, the solvent supply unit comprising a main flow path sequentially passing through N solvent spray nozzles disposed along a width direction (TD), a sub-flow path branched from the main flow path, and a valve located at a branching point thereof, which may be configured to close the main flow path to allow solvent to flow into the sub-flow path by operation of the valve.

The drying device according to one embodiment of the present invention is such that the solvent supply to some of the solvent spray nozzles of the plurality of solvent spray nozzles that do not require solvent spray can be blocked by causing the valve to divert the solvent into a sub-flow path. Thus, depending on the type of electrode coating, it is not necessary to change the design of the solvent supply unit.

## Description

### [Technical Field]

This application claims priority to Korean Patent Application No. 10-2023-0031025, filed on March 9, 2023.

The present invention relates to a drying device and drying method for an electrode sheet, and more specifically, to a drying device and method for an electrode sheet configured to control the supply of solvent to a solvent spray nozzle depending on changes in the coating pattern of the electrode sheet.

### [Background Technology of the Invention]

In general, lithium secondary batteries are composed of a positive electrode, a negative electrode, and an electrolyte material interposed between them, and are divided into lithium ion batteries, lithium polymer batteries, and others depending on which positive electrode active material and negative electrode active material are used.

The electrodes of these lithium secondary batteries can be formed by coating negative electrode or positive electrode active materials on current collectors such as aluminum or copper sheets, meshes, films, or foils, and then drying them in a drying oven.

The electrode sheet being supplied by moving into the drying oven may include a coated portion coated with an electrode slurry and a non-coated portion not coated with an electrode slurry, and during the drying process, the solvent in the electrode slurry of the coated portion is evaporated by drying, and the electrode slurry of the coated portion shrinks accordingly. The force of the shrinkage of the electrode slurry of the coated portion during the drying process may act as a stress on the current collector of the non-coated portion, causing wrinkles and cracks. This phenomenon is further aggravated by the increasing hot air temperature due to the tendency of high capacity and high loading of batteries.

Korean Public Patent No. 10-2021-0015278 discloses a technology that cools the temperature inside a drying oven by spraying moisture into the drying oven to minimize the occurrence of damage such as deintercalation and cracking of the electrode due to overdrying, thereby maintaining a drying stabilization level of the electrode to be dried. However, in the above technology, a moisture spray nozzle is installed in a duct to supply moisture in the form of mist to the hot air supplied to the inside of the drying oven through the duct, and since the moisture is not directly sprayed onto the non-coated portion, there was a limitation in the occurrence of non-coated portion cracks. Therefore, a technology has been attempted to spray moisture onto the non-coated portion by installing a moisture spray nozzle inside the drying oven.

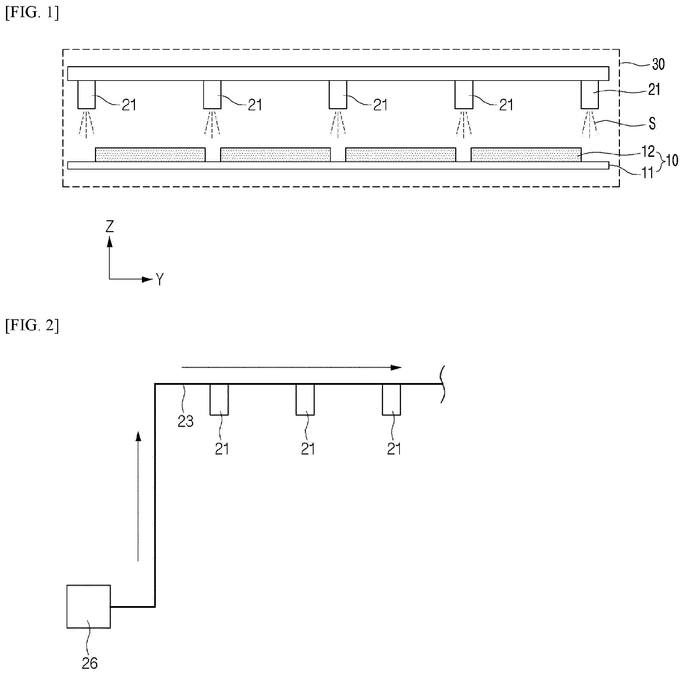

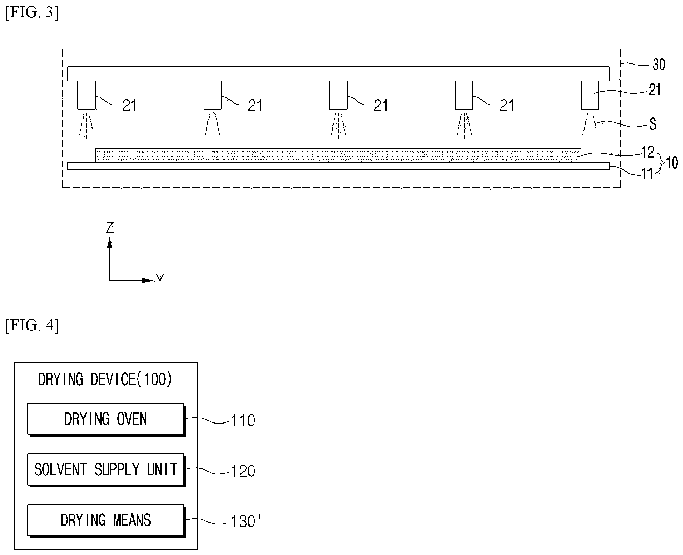

FIG. 1 illustrates a conventional electrode sheet drying device having a moisture spray nozzle installed in a drying oven, FIG. 2 illustrates a conventional method of supplying moisture to the moisture spray nozzle shown in FIG. 1, and FIG. 3 illustrates a problem with the conventional method of supplying moisture.

Referring to these figures, a plurality of moisture spray nozzles 21 are installed in the drying oven 30, which are spaced apart at a certain distance along the width direction (TD, Y direction) of the electrode sheet 10, and are configured to supply moisture S from the top side of the electrode sheet 10 towards the electrode sheet 10. Further, a main flow path 23 passes through the plurality of moisture spray nozzles 21, and a pump 26 is configured to supply solvent stored in a storage tank (not shown) to the plurality of moisture spray nozzles 21 through the main flow path 23.

Meanwhile, when coating the electrode slurry, it is possible to coat it so that the coated portion 12 and the non-coated portion 11 alternately appear along the width direction (Y direction) of the electrode sheet, as shown in FIG. 1, or to coat it so that the non-coated portion 11 is located at both edges of the width direction of the electrode sheet and the coated portion 12 is located in the center, as shown in FIG. 3.

However, conventional moisture supplying methods are not suitable for this change in coating shape. That is, the coating device of FIG. 1 is suitable for an electrode sheet with alternating coated and non-coated portions 12 and 11, but for an electrode sheet with non-coated portion 11 located on both edges only, as shown in FIG. 3, the coating device is forced to spray moisture on the coated portion 12 in the center, which does not need moisture to be sprayed.

Therefore, it is necessary to develop a drying device and drying method for electrode sheets that can improve these problems.

### [Description of the Invention]

### [Technical Problem]

The present invention aims to provide a drying device and a drying method of an electrode sheet, comprising a plurality of solvent spray nozzles, some of which include a solvent supply unit capable of shutting off the solvent supply in response to a change in the coating shape of the electrode sheet.

### [Technical Solution]

According to an exemplary embodiment of the present invention, the present invention provides an electrode sheet drying device comprising: a drying oven formed with an internal space for drying an electrode sheet on which an electrode slurry is coated on a current collector, and a solvent supply unit configured to spray solvent onto the electrode sheet traveling within the drying oven.

According to an exemplary embodiment, the solvent supply unit may comprise: N solvent spray nozzles installed in the drying oven, plurally disposed along a width direction (TD) of the electrode sheet, spraying solvent toward a non-coated portion of the electrode sheet; a storage tank storing the solvent that will be supplied to the solvent spray nozzle; a main flow path connected to the storage tank and sequentially passing through the N solvent spray nozzles; one or more sub-flow paths that branch off from the main flow path and merge back into the main flow path; and a valve that is located at the branching point of the main and sub-flow paths, and opens and closes the main flow path.

According to an exemplary embodiment, the valve closes the main flow path in the "on" state to allow solvent to flow into the sub-flow path and opens the main flow path in the "off" state to allow solvent to flow into the main flow path.

According to an exemplary embodiment, the number of valves may correspond to the number of sub-flow paths.

According to an exemplary embodiment, the number of sub-flow path may be two or more.

According to an exemplary embodiment, the number of sub-flow path may be N-2 or less.

According to an exemplary embodiment, one sub-flow path may be configured to bypass one solvent spray nozzle.

According to an exemplary embodiment, the valve is two or more, and each valve may be configured to be independently controllable for on-off operation.

According to an exemplary embodiment, a first solvent spray nozzle disposed at one outermost part of the electrode sheet width direction (TD) and the Nth solvent spray nozzle disposed at the other outermost part of the electrode sheet width direction (TD) may be configured to be supplied with the solvent only through the main flow path.

According to an exemplary embodiment, the solvent supply unit may further comprise: a pump for supplying a solvent stored in the storage tank to a solvent spray nozzle via a main flow path.
According to an exemplary embodiment, the solvent spray nozzle may be plurally disposed along the traveling direction (MD) of the electrode sheet.

A electrode sheet drying device according to an exemplary embodiment may further comprise a hot air supply unit for supplying hot air to the electrode sheet traveling within the drying oven, wherein the hot air supply unit may comprise: a heat exchanger that heats the supplied outside air; a hot air spray nozzle installed within the drying oven, configured to blow hot air toward the electrode sheet; a blower fan for supplying outside air heated by the heat exchanger to a hot air spray nozzle through a duct connected to an interior space of the drying oven; and a damper installed in the duct to regulate the hot air supply.

According to another exemplary embodiment, the present invention provides an electrode sheet drying method comprising: placing the electrode sheet in the drying oven, and entering the location information of the non-coated portion that will not be sprayed with solvent; a valve operation process operating a valve located at a branching point of a main flow path passing through N solvent spray nozzles plurally disposed along a width direction (TD) of the electrode sheet and a sub-flow path branching from the main flow path based on the entered information; and supplying a solvent and spraying the solvent through the solvent spray nozzle.

An electrode sheet drying method according to an exemplary embodiment enables control of solvent supply to the at least one solvent spray nozzle through the valve operation process.

In an exemplary embodiment, the valve closes the main flow path in the "on" state to allow solvent to flow into the sub-flow path and opens the main flow path in the "off" state to allow solvent to flow into the main flow path.

In an exemplary embodiment, the number of sub-flow path may be two or more.

In an exemplary embodiment, each of the sub-flow path may be configured to bypass one solvent spray nozzle.

### [Advantageous Effects]

In the drying device according to an exemplary embodiment of the present invention, the solvent supplied to the solvent spray nozzles through the main flow can be diverted to a sub-flow path, thereby blocking the supply of solvent to some of the plurality of solvent spray nozzles that do not require solvent spraying. Thus, depending on the type of coating of the electrode sheet, it is not necessary to change the design of the solvent supply unit.

### [Brief Description of the Drawings]

FIG. 1 is a drawing illustrating a conventional electrode sheet drying device with a moisture spray nozzle installed inside a drying oven.
FIG. 2 is a drawing illustrating a conventional method of supplying moisture to the moisture spray nozzle illustrated in FIG. 1.
FIG. 3 is a drawing illustrating the problems with the conventional moisture supply method.
FIG. 4 is a block diagram of an electrode sheet drying device according to an exemplary embodiment.
FIG. 5 is a block diagram of a solvent supply unit according to an exemplary embodiment.
FIG. 6 is a drawing of an electrode sheet drying device according to an exemplary embodiment.
FIG. 7 is a partial enlarged view of the electrode sheet drying device according to an exemplary embodiment.
FIG. 8 is a drawing of a solvent supply unit according to an exemplary embodiment.
FIG. 9 is an enlarged drawing of a part of FIG. 8 to explain the operation of the valve according to an exemplary embodiment.
FIG. 10 is a drawing to explain the effects of the invention.
FIG. 11 is a drawing of a solvent supply unit according to another exemplary embodiment.
FIG. 12 is a flowchart explaining the method of drying an electrode sheet according to an exemplary embodiment.

### [Reference numerals]

10: ELECTRODE SHEET
11: NON-COATED PORTION
12: COATED PORTION
100: DRYING DEVICE
30, 110: DRYING OVEN
120: SOLVENT SUPPLY UNIT
130: HOT AIR SUPPLY UNIT
130': DRYING MEANS
21, 121: SOLVENT SPRAY NOZZLE
122: STORAGE TANK
123: MAIN FLOW PATH
124: SUB-FLOW PATH
125: VALVE
126: PUMP

### [Best Mode for Carrying out the Invention]

Hereinafter, the present invention will be described in detail. Prior to this, the terms and words used in this specification and claims should not be construed in a limited or merely dictionary sense, but should be interpreted according to the meaning and concept consistent with the technical spirit of the present invention, based on the principle that the inventor is entitled to define terms in a way that best describes his invention.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

In this specification, the X direction corresponds to the direction in which the electrode sheet is transferred, the Y direction to the width direction of the electrode sheet, and the Z direction to the direction perpendicular to the plane of the electrode sheet or the direction of the hot air spray.

In the present invention, the coated portion refers to the area of the electrode sheet where the electrode slurry is applied, while the non-coated portion refers to the area where the electrode slurry is not applied and where the current collector is exposed.

### Electrode Sheet Drying Device

### [First Embodiment]

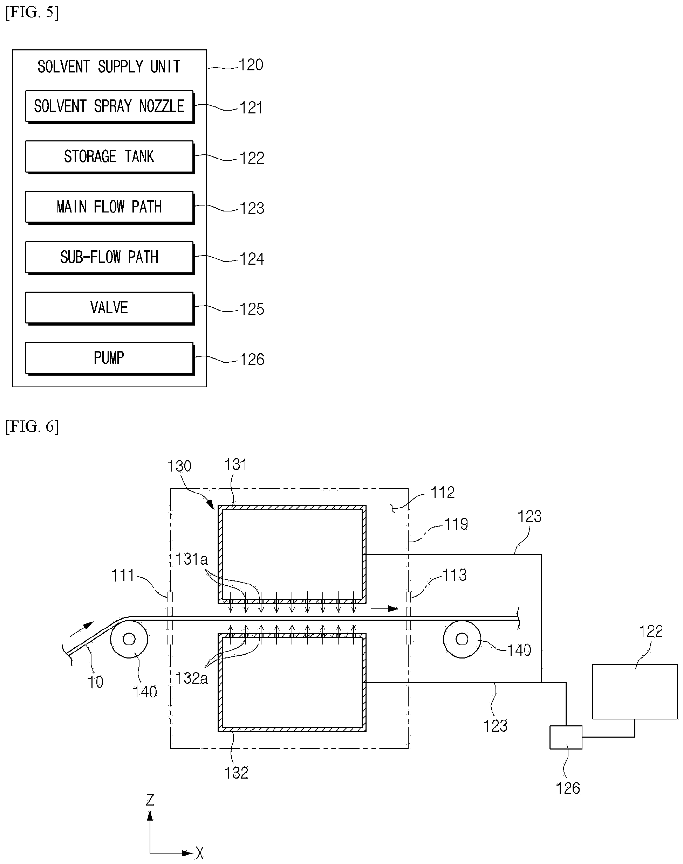

FIG. 4 is a block diagram of an electrode sheet drying device according to an exemplary embodiment, and FIG. 5 is a block diagram of a solvent supply unit according to an exemplary embodiment.

Referring to FIG. 4, the drying device for the electrode sheet (100, hereinafter referred to as 'drying device') may include a drying oven 110, a solvent supply unit 120, and drying means 130'. According to an embodiment, the solvent supply unit 120 can be configured to block the supply of solvent to some of the plurality of solvent spray nozzles in response to changes in the coating shape of the electrode sheet.

Referring to FIG. 5, the solvent supply unit 120 according to an exemplary embodiment may include a solvent spray nozzle 121, a storage tank 122, a main flow path 123, sub-flow path 124, a valve 125, and a pump 126. In exemplary embodiments, the valves 125 can be operated by on-off control to open and close the main flow path and block the supply of solvent to some solvent spray nozzles that do not require solvent supply among the plurality solvent spray nozzles 121 sequentially passing through the main flow path.

Such a solvent supply unit 120 can block the supply of solvent to the solvent spray nozzles located on the top side of the coated portion that do not require spraying, thus eliminating the need to change the design of the solvent supply unit according to the electrode coating shape.

FIG. 6 is a drawing of an electrode sheet drying device according to an exemplary embodiment.

Referring to FIG. 6, the drying oven 110 constitutes the main frame of the electrode drying device 100 and is equipped with an internal space 112 for drying. On one side of the drying oven 110, there is an inlet 111 through which the electrode sheet 10 to be dried is introduced, and on the other side, there may be an outlet 113 through which the dried electrode sheet 10 can be discharged.

The drying device 100 can include a transfer portion that unidirectionally transfers the electrode sheet 10 to be dried through the internal space 112 via the inlet 111 and outlet 113. The transfer portion can move the electrode sheet 10 in one direction using a plurality of transfer rollers 140 that rotate unidirectionally, powered by a motor (not shown).

Referring to FIG.4 and FIG.6, the drying device 100 may include drying means 130'. The drying means 130' is not limited as long as it is any means capable of supplying thermal energy to the electrode slurry to remove the solvent from the electrode slurry and drying it.

According to an exemplary embodiment, the drying means 130' may include a hot air supply unit 130 and/or a heater. FIG. 6 illustrates an exemplary embodiment where the hot air supply unit 130 is adopted as the drying means 130'.

According to an exemplary embodiment, the hot air supply unit 130 serves to dry the electrode slurry on the electrode sheet 10 by directing hot air towards the transferring electrode sheet.

Specifically, the hot air supply unit 130 may comprise an upper trunk 131 provided with a hot air supply passage therein, and a lower trunk 132 spaced apart from the upper trunk 131 such that the electrode sheet 10 to be dried is transferred unidirectionally therebetween. On opposite sides of the upper and lower trunks 131,132, hot air spray nozzles 131a,132a having discharge holes formed therein capable of supplying hot air toward the electrode sheet 10 to be dried may be installed. The hot air spray nozzles 131a,132a may be installed on the upper part of the electrode sheet 10 traveling within the drying oven 110, or may be installed on the upper and lower parts respectively.

According to an exemplary embodiment, the hot air supplied to the internal space 111 of the drying oven 110 may be a flow structure in which some of the hot air is circulated after being used to dry the electrode sheet 10, and the remainder is exhausted to the outside.

According to an exemplary embodiment, the hot air supply unit 130 comprises a heat exchanger (not shown) for heating the supplied outside air; a hot air spray nozzle 131a, 132a installed within the drying oven 110 and configured to blow hot air towards the electrode sheet 10; a blower fan (not shown) for supplying the outside air heated by the heat exchanger to the hot air spray nozzles 131a,132a through a duct connected to an internal space of the drying oven 110; and a damper (not shown) installed within the duct (not shown) for regulating the amount of hot air supplied.

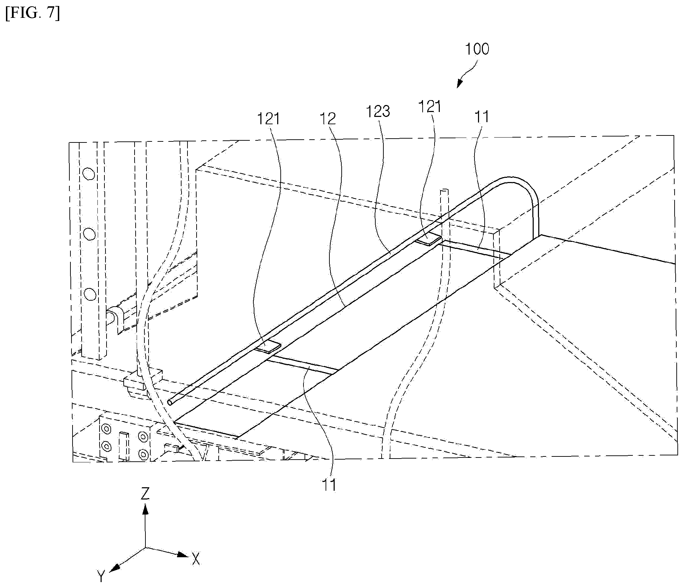

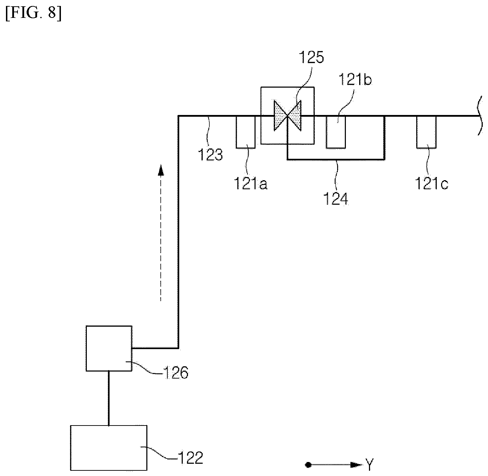

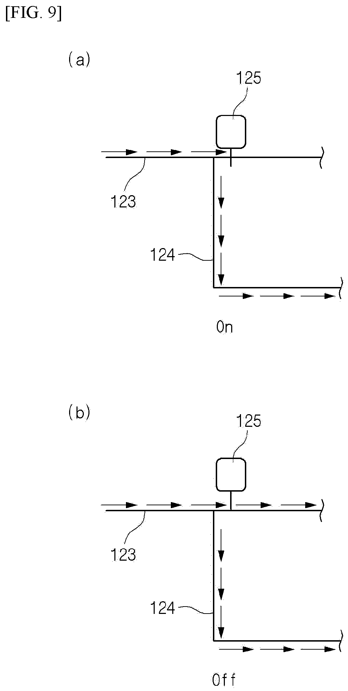

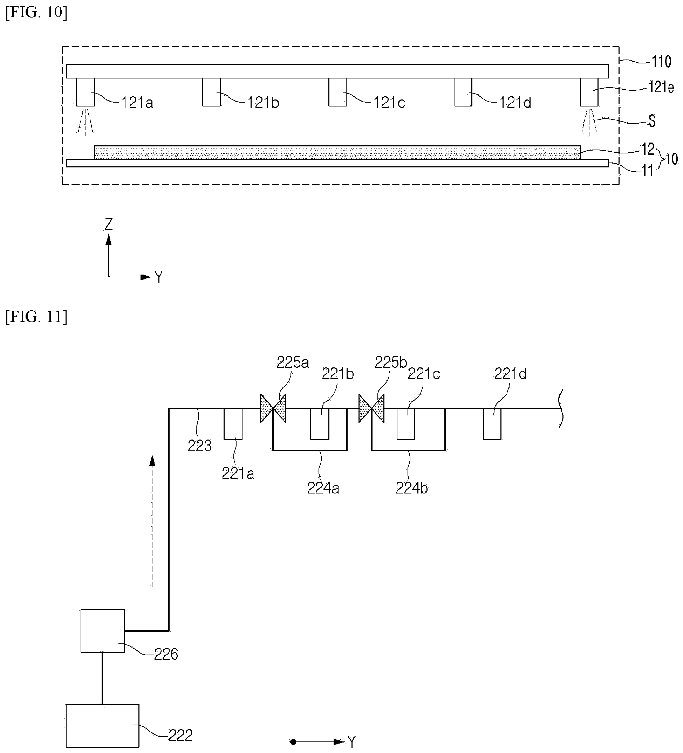

FIG. 7 is a partially enlarged view of an electrode sheet drying device according to an exemplary embodiment, FIG. 8 is a drawing of a solvent supply unit according to an exemplary embodiment, FIG. 9 is a partially enlarged view of FIG. 8 to illustrate the operation of a valve according to an exemplary embodiment, and FIG. 10 is a drawing to illustrate the effectiveness of the present invention.

The solvent supply unit 120 may be configured to spray a solvent onto the electrode sheet 10 traveling within the drying oven 110.

Referring to FIGS. 5 and 7, the solvent supply unit 120 according to an exemplary embodiment may include a solvent spray nozzle 121, a storage tank 122, a main flow path 123, a sub-flow path 124, a valve 125, and a pump 126.

According to an exemplary embodiment, the solvent spray nozzle 121 may be formed with one or more through holes through which the solvent can be sprayed. The solvent spray nozzle 121 may be installed within the internal space 111 of the drying oven 110, and more specifically, it may be installed on an outer surface opposite the lower trunk 132 among the outer surfaces of the upper trunk 131 of the hot air supply unit 130. However, the embodiment is not limited to this, as long as the structure is capable of spraying the solvent towards the electrode sheet 10.

According to an exemplary embodiment, a plurality (N) of solvent spray nozzles 121 may be disposed along the width direction (TD, Y direction) of the electrode sheet, and each of the N solvent spray nozzles 121 may be spaced apart from each other. Here, N refers to an integer of 2 or more, and may be in the range of 2 to 50, more particularly in the range of 2 to 30, or in the range of 3 to 10, but is not limited thereto.

Since the plurality of solvent spray nozzles 121 are spaced apart, it has the effect of spraying the solvent toward a plurality of non-coated portions of the pattern-coated electrode sheet in a form in which the coated portions and the non-coated portions alternate along the width direction TD of the electrode sheet. In this case, N, the number of solvent spray nozzles 121, may be the same as the number of non-coated portions appearing along the width direction TD of the electrode sheet 10.

According to one embodiment, the solvent spray nozzles 121 may be disposed in a plurality not only along the width direction (TD, Y direction), but also along the traveling direction (MD, X direction) of the electrode sheet. The drying oven 110 may comprise two or more drying zones that are physically or conceptually compartmentalized along the traveling direction MD of the electrode sheet 10, with the drying zone at the rear end being a section where drying is nearly complete, and overdrying is relatively less likely to occur. Accordingly, the solvent spray nozzle 121 may be installed only in the rear end drying zone, or alternatively, in the middle and rear end drying zones. However, it is not limited thereto, and the solvent spray nozzles 121 may be installed in all of the front end, middle, and rear end drying zones, but each of the solvent spray nozzles may be configured to be independently controllable so that solvent is only controlled to be sprayed from the solvent spray nozzle 121 installed in the drying zone that requires solvent spraying.

If the solvent spray nozzles are installed in M rows along the traveling direction MD of the electrode sheet, the solvent spray nozzles may be arranged in a matrix of N × M in the drying oven 110.

According to one embodiment, the storage tank 122 may be configured to store solvent to be supplied to the plurality of solvent spray nozzles 121. The storage tank 122 may have a storing space formed therein for storing the solvent.

In one embodiment, the solvent supplied to the solvent spray nozzle is not particularly limited in type, as long as it is one that can be removed by the heat of drying without causing a chemical reaction with the current collector of the non-coated portion or the electrode slurry around it during the drying process. Specific examples of such solvents include water, alcohol, a solvent of an electrode slurry, an organic solvent of an electrolyte solution, and the like, and water may be preferred for environmental purposes.

According to one embodiment, the main flow path 123 serves as a transfer pipe for supplying solvent supplied from the storage tank 122 to the N solvent spray nozzles 121.

According to one embodiment, the main flow path 123 is connected to the storage tank 122 and may be structured to sequentially pass through the N solvent spray nozzles 121.

According to this embodiment, the solvent is supplied from one storage tank 122 to N solvent spray nozzles 121 through one main flow path, which has the advantage of simplifying the design of the solvent supply unit and reducing the space it occupies.

The sub-flow path 124, according to one embodiment, serves as a bypass for blocking the supply of solvent through the main flow 123 for a portion of the solvent spray nozzles 121. **In** some embodiments, one sub-flow path 124 is configured to bypass one solvent spray nozzle 121. Accordingly, the supply of solvent may be controlled to prevent solvent from being supplied to solvent spray nozzles where it is not needed.

According to one embodiment, the sub-flow path 124 may be structured to branch off from the main flow path 123 and then merge back into the main flow path 123. Accordingly, solvent introduced into the sub-flow path 124 may flow back into the main flow path 123 at a merge point where it merges with the main flow path 123.

The valve 125 according to one embodiment is located at a branching point of the main flow path 123 and the sub-flow path 124, and may be configured to open and close the main flow path 123. When the valve 125 closes the main flow path 123, the solvent supplied through the main flow path 123 flows into the sub-flow path 124 at the branching point.

Conversely, in the off state of the valve 125, the main flow path 123 is open, so solvent supplied through the main flow path 123 can enter the main flow path 123 at the branching point. Meanwhile, the valve 125 does not open or close the sub-flow path 124, so solvent can be supplied to the sub-flow path 124 regardless of the on and off states of the valve 125.

According to one embodiment, the number of valves 125 may correspond to the number of sub-flow paths 124. That is, the number of valves 125 and the number of sub-flow paths 124 may be the same. This is because the valves 125 have the function of closing the main flow path 123 to allow solvent to flow into the sub-flow path 124, and it is understandable that a number of valves 125 corresponding to the number of sub-flow paths 124 is required.

Referring to FIGS. 8 and 9, in one embodiment, there may be three solvent spray nozzles 121a,121b,121c spaced apart along the width direction (Y direction) of the electrode sheet. For ease of description, the leftmost solvent spray nozzle will be referred to as the first solvent spray nozzle 121a, the center solvent spray nozzle will be referred to as the second solvent spray nozzle 121b, and the rightmost solvent spray nozzle will be referred to as the third solvent spray nozzle 121c.

In exemplary embodiments, one sub-flow path 124 may be configured to bypass one solvent spray nozzle 121b. And, the valve 125 may be located at or near the branching point of the main flow path 123 and the sub-flow path 124.

FIG. 9 (a) shows solvent flow (arrow) with valve 125 in the on state, and FIG. 9 (b) shows solvent flow (arrow) with valve 125 in the off state. This will be explained with reference to FIG. 9. When the valve 125 in the on state closes the main flow path 123, solvent flows into the sub-flow path 124 at the branching point and is not supplied to the main flow path through the branching point and to the next branching point. When the valve 125 in the off state opens the main flow path 123, solvent flows into the main flow path 123 and the sub-flow path 124.

Accordingly, in the off state of the valve 125, solvent may be sequentially supplied through the main flow path 123 to the first solvent spray nozzle 121a, the second solvent spray nozzle 121b, and the third solvent spray nozzle 121c. And when the valve 125 is operated to the on state to stop the solvent supply to the second solvent spray nozzle 121b, the main flow path is closed at the branching point, and the solvent supplied through the main flow path 123 flows into the sub-flow path 124, and the solvent is not supplied to the second solvent spray nozzle 121b. Meanwhile, since the sub-flow path 124 branches off from the main flow path 123 and then merges back into the main flow path 123, the solvent introduced into the sub-flow path 124 may enter the main flow path 123 after the merge point where the sub-flow path 124 merges back into the main flow path 123, and may be supplied to the third solvent spray nozzle 121c located downstream thereof.

As such, the sub-flow path 123 may serve as a bypass to prevent solvent from being supplied to the second solvent spray nozzle by the operation of the valve 125.

The solvent supply unit 120, according to one embodiment, may further include a valve controller for controlling the on-off operation of the valve 125.

According to one embodiment, the first solvent spray nozzle disposed at the outermost part of one side of the electrode sheet width direction (TD) and the second solvent spray nozzle disposed at the outermost part of the other side may be configured to be supplied with solvent only through the main flow path.

This will be described with reference to FIG. 8. **In** the embodiment according to FIG. 8, for the first solvent spray nozzle 121a disposed at one outermost edge in the electrode sheet width direction and the third solvent spray nozzle 121c disposed at the other outermost edge in the electrode sheet width direction, there are no sub-flow paths bypassing them.

This design is based on the fact that it is not necessary to control whether solvent is supplied or not for the first solvent spray nozzle disposed at the outermost part of one side of the electrode sheet width direction and the second solvent spray nozzle disposed at the outermost part of the other side of the electrode sheet width direction.

In other words, the first solvent spray nozzle 121a located at the outermost part of one side and the third solvent spray nozzle 121c located at the outermost part of the other side spray solvent into the non-coated portions at both edges of the electrode sheet width direction (Y direction), and since it is common for non-coated portions to be formed at both edges of the electrode sheet width direction, the first and third solvent spray nozzles 121a,121c generally need to spray solvent at all times. Thus, for this general shape of the electrode sheet, the solvent spray nozzles located at both outermost parts do not need to be controlled for solvent supply.

However, this description is for a generalized electrode sheet, and if there is a change in the coating form of the electrode sheet, even the solvent spray nozzle located at the outermost part can be controlled to supply solvent by installing sub-flow paths and valves as described above.

The solvent supply unit 120, according to one embodiment, may be configured to independently control whether solvent is supplied to each solvent spray nozzle.

Accordingly, when an electrode sheet coated with a form in which the coated portion 12 and the non-coated portion 11 alternately appear along the width direction (TD, Y direction) as shown in FIG. 1 is supplied, a solvent spray nozzle positioned on the upper side of the non-coated portion 11 can spray solvent onto the non-coated portion. Furthermore, when the electrode sheet 10 is supplied in a form in which the non-coated portion 11 is formed only on both edges in the width direction of the electrode sheet as shown in FIG. 10, the solvent is not supplied to the solvent spray nozzles 121b~121d located on the upper side of the coated portion 12 by the on-off operation of the valve, and can be diverted to the sub-flow path. As described above, the drying device according to the present invention has the effect that solvent can be sprayed onto the non-coated portion in response to electrode sheets having various coating forms.

The pump 126 serves to supply the solvent stored in the storage tank 122 to the solvent spray nozzle 121 via the main flow path 123. The pump 126 may be installed within the storage tank 122, or it may be installed outside the storage tank 122. The pump may be configured to pump solvent stored within the storage tank and supply it into the main flow path 123.

### [Second embodiment]

FIG. 11 illustrates a solvent supply unit according to another exemplary embodiment of the present invention.

Referring to FIG. 11, there may be four solvent spray nozzles spaced apart along the width direction (Y direction) of the electrode sheet. For ease of description, the four solvent spray nozzles will be referred to as the first solvent spray nozzle to the fourth solvent spray nozzle 221a,221b,221c,221d, sequentially from the leftmost to the rightmost.

For the remaining solvent spray nozzles, the second solvent spray nozzle 221b and the third solvent spray nozzle 221c, except for the first solvent spray nozzle and the fourth solvent spray nozzle, which are located at the outermost parts on either side of the electrode sheet width direction (Y direction), sub-flow paths 224a,224b bypassing them may each branch from the main flow path 223.

As the number of solvent spray nozzles increases, it is desirable to have more than one sub-flow path in order to independently control the solvent supply to each of the solvent spray nozzles. And, since there are more than two sub-flow paths, there may be more than two valves at the branching point of the main flow path and the sub-flow path.

For ease of description, in FIG. 11, the two sub-flow paths 224a,224b will be referred to as first sub-flow path 224a, second sub-flow path 224b, sequentially from leftmost to rightmost, and the valve located at the branching point of first sub-flow path 224a will be referred to as first valve 225a, and the valve located at the branching point of second sub-flow path 224b will be referred to as second valve 225b.

Referring to FIG. 11, in the path of the main flow path 223, a first sub-flow path 224a may be branched between the first solvent spray nozzle 221a and the second solvent spray nozzle 221b, and a second sub-flow path 224b may be branched between the second solvent spray nozzle 221b and the third solvent spray nozzle 221c, in the path of the main flow path 223.

The first sub-flow path 224a may rejoin the main flow path 223 upstream of the branching point of the second sub-flow path 224b, and the second sub-flow path 224b may rejoin the main flow path 223 between the third solvent spray nozzle 221c and the fourth solvent spray nozzle 221d, in the path of the main flow path 223.

As such, to control solvent supply to each of the plurality of solvent spray nozzles, each of the sub-flow paths 224a,224b is preferably configured to bypass one solvent spray nozzle each.

The number of valves corresponds to the number of sub-flow paths, so that if there is more than one sub-flow path, there may also be more than one valve. If there is more than one valve, each valve may be configured to control the on-off operation independently.

As a result, the on-off operation of each of the plurality of valves can be controlled independently, enabling control of the solvent supply to the solvent spray nozzle through the main flow path in response to electrode sheets with different coating types.

In the above embodiment, three or four solvent spray nozzles are installed, but the number of solvent spray nozzles is not limited. Accordingly, the number of sub-flow paths is not limited to one or two, but can be increased in correspondence with the number of solvent spray nozzles.

Meanwhile, if the number of solvent spray nozzles is N, there can be up to N-2 sub-flow paths installed.

### Drying method of electrode sheet

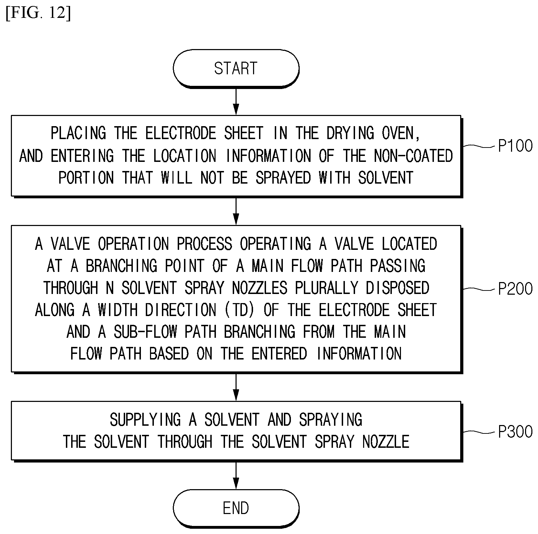

FIG. 12 is a flowchart to illustrate a method for drying an electrode sheet (hereinafter referred to as "drying method") according to an exemplary embodiment.

Referring now to FIGS. 8 to 12, a drying method according to an exemplary embodiment includes a process P100 of placing the electrode sheet in the drying oven, and entering the location information of the non-coated portion that will not be sprayed with solvent; a valve operation process P200 operating a valve located at a branching point of a main flow path passing through N solvent spray nozzles plurally disposed along a width direction (TD) of the electrode sheet and a sub-flow path branching from the main flow path based on the entered information; and supplying a solvent and spraying the solvent through the solvent spray nozzle P300.

A drying method according to some exemplary embodiments may utilize the drying device 100 described above. For example, a drying method according to the present invention may use a drying device of an electrode sheet including: a drying oven 110 in which an internal space is formed for drying electrode sheets on which an electrode slurry has been applied to a current collector; a solvent supply unit 120 configured to spray a solvent onto electrode sheets traveling within the drying oven, wherein the solvent supply unit includes: N solvent spray nozzles 121 installed in the drying oven and plurally disposed along a width direction (TD) of the electrode sheets, spraying solvent towards a non-coated portion of the electrode sheet; a storage tank 122 in which a solvent to be supplied to the solvent spray nozzles is stored; a main flow path 123 connected to the storage tank and passing sequentially through the N solvent spray nozzles; at least one sub-flow path 124 branching off from the main flow path and merging back into the main flow path; and a valve 125 located at a branching point of the main flow path and the sub-flow path, opening and closing the main flow path. The drying device, the drying oven, the solvent spray nozzle, the main flow path, the sub-flow path and the valve have been described in detail previously, so that repetition will be omitted.

The drying method according to one embodiment may be configured to allow control of solvent supply to the at least one solvent spray nozzle via the valve operation.

## Claims

1. An electrode sheet drying device comprising:
a drying oven formed with an internal space for drying an electrode sheet on which an electrode slurry is coated on a current collector; and
a solvent supply unit configured to spray solvent onto the electrode sheet traveling within the drying oven, wherein
the solvent supply unit comprises:
N solvent spray nozzles installed in the drying oven, plurally disposed along a width direction (TD) of the electrode sheet, spraying solvent toward a non-coated portion of the electrode sheet;
a storage tank storing the solvent that will be supplied to the solvent spray nozzle;
a main flow path connected to the storage tank and sequentially passing through the N solvent spray nozzles;
one or more sub-flow paths that branch off from the main flow path and merge back into the main flow path; and
a valve that is located at the branching point of the main and sub-flow paths, and opens and closes the main flow path.

2. The electrode sheet drying device of claim 1, wherein
the valve closes the main flow path in the "on" state to allow solvent to flow into the sub-flow path and opens the main flow path in the "off" state to allow solvent to flow into the main flow path.

3. The electrode sheet drying device of claim 1, wherein
the number of valves corresponds to the number of sub-flow paths.

4. The electrode sheet drying device of claim 1, wherein
the number of sub-flow path is two or more.

5. The electrode sheet drying device of claim 4, wherein
the number of sub-flow path is N-2 or less.

6. The electrode sheet drying device of claim 1, wherein
one sub-flow path is configured to bypass one solvent spray nozzle.

7. The electrode sheet drying device of claim 4, wherein
the valve is two or more, each valve configured to be independently controllable for on-off operation.

8. The electrode sheet drying device of claim 3 or claim 4, wherein
a first solvent spray nozzle disposed at one outermost part of the electrode sheet width direction (TD) and the Nth solvent spray nozzle disposed at the other outermost part of the electrode sheet width direction (TD) are configured to be supplied with the solvent only through the main flow path.

9. The electrode sheet drying device of claim 1, wherein
the solvent supply unit further comprises:
a pump for supplying a solvent stored in the storage tank to a solvent spray nozzle via a main flow path.

10. The electrode sheet drying device of claim 1, wherein
the solvent spray nozzle is plurally disposed along the traveling direction (MD) of the electrode sheet.

11. The electrode sheet drying device of claim 1, further comprising
a hot air supply unit for supplying hot air to the electrode sheet traveling within the drying oven, wherein
the hot air supply unit comprises:
a heat exchanger that heats the supplied outside air;
a hot air spray nozzle installed within the drying oven, configured to blow hot air toward the electrode sheet;
a blower fan for supplying outside air heated by the heat exchanger to a hot air spray nozzle through a duct connected to an interior space of the drying oven; and
a damper installed in the duct to regulate the hot air supply.

12. An electrode sheet drying method comprising:
placing the electrode sheet in the drying oven, and entering the location information of the non-coated portion that will not be sprayed with solvent;
a valve operation process operating a valve located at a branching point of a main flow path passing through N solvent spray nozzles plurally disposed along a width direction (TD) of the electrode sheet and a sub-flow path branching from the main flow path based on the entered information; and
supplying a solvent and spraying the solvent through the solvent spray nozzle, wherein
the valve operation process enables control of solvent supply to the at least one solvent spray nozzle.

13. The electrode sheet drying method of claim 12, wherein
the valve closes the main flow path in the "on" state to allow solvent to flow into the sub-flow path and opens the main flow path in the "off" state to allow solvent to flow into the main flow path.

14. The electrode sheet drying method of claim 12, wherein
the number of sub-flow path is two or more.

15. The electrode sheet drying method of claim 14, wherein
each of the sub-flow path bypasses one solvent spray nozzle.
